# EUROPEAN PATENT APPLICATION

(11) **EP 1 174 811 A1**
(43) Date of publication of application: **23.01.2002**
(21) Application number: 01301042.6
(22) Date of filing: 06.02.2001
(51) Int. Cl.: G06F 17/60

(54) **System, method and storage medium for mediating between users and manufacturers via a network**

(30) Priority: 19.07.2000 JP 2000219708
(71) Applicant: FUJITSU LIMITED, Kawasaki-shi, Kanagawa 211-8588 (JP)
(72) Inventor: Fujita, Ichiro, c/o Fujitsu Limited, Kawasaki-shi, Kanagawa 211-8588 (JP)
(74) Representative: Stebbing, Timothy Charles

(57) **Abstract**

A system (100) for mediating between at least one user and at least one manufacturer via a network is disclosed. The system (100) includes a storage part (106,107,108,109,110,111)in which purchase information related to products possessed by the at least one user is stored and an insurance request part (105) capable of requesting insurance on the products according to the purchase information stored in the storage part (106,107,108,109,110,111).

## Description

### BACKGROUND OF THE INVENTION

### 1. Field of the Invention

The present invention generally relates to a system for managing product information, and particularly relates to a product information system for mediating information transfer between a plurality of users and a plurality of manufacturers over a network.

### 2. Description of the Related Art

Upon purchasing products, a user can make an insurance contract for the purpose of product guarantee. For instance, a user who has purchased a valuable product may wish to insure the product against theft and against damage.

For newly purchased equipment such as electronic products, retail shops take necessary procedures to issue guarantee certificates in order to make maintenance contracts between manufacturers and users. Such maintenance contracts may guarantee that the manufacturer will offer free maintenance of the product for any failure within a year from the date of purchase.

Generally, a product is individually insured or guaranteed under an insurance contract made at a retail store upon purchase or automatically made upon purchase using a credit card offering insurance service of the purchased product.

However, with such a circumstance, the only occasion for the user to make an insurance contract or a guarantee contract with the manufacturer is limited to a considerably short period of time after purchasing the product. Also, the user may not properly keep the guarantee certificate and/or a specification. Then, a user wishing to claim any guarantee or newly make an insurance contract for a product purchased in the past has to undergo cumbersome procedures. That is to say, the user must to find his/her guarantee certificate and/or a specification, directly call the manufacturer, and directly make inquiries to an insurance company.

Also, when the user wishes to insure a plurality of products, an insurance contract must be made for each individual product. This is cumbersome and also results in a considerably high total premium when individual premiums for a plurality of products are summed up.

### SUMMARY OF THE INVENTION

Accordingly, it is a general object of the present invention to provide a product information system for mediating between a plurality of users and a plurality of manufacturers over a network.

It is another and more specific object of the present invention to provide a product information system with which a user can make a contract for the best insurance for a product possessed by the user.

In order to achieve the above objects according to the present invention, a system for mediating between at least one user and at least one manufacturer via a network includes:
a storage part in which purchase information related to products possessed by the at least one user is stored; and
an insurance request part capable of requesting insurance on the products according to the purchase information stored in the storage part.

With the product information system of the present invention, the user registers information of the product the user possesses. Thus, the user can request a quote estimate for insuring his product from a plurality of insurers. The user can select the best insurance based on the received quote estimates. Therefore, the user can take necessary procedures for making an insurance contract whenever he wishes to.

Also, with the product information system of the present invention, a plurality of products registered in the system can be covered under a single insurance contract. Therefore, the user can insure a plurality of his possessions with a single procedure and with a reduced premium compared to a case in which a plurality of products are insured individually.

A further advantage of the present invention is that even if the user does not know detailed information about the product he wishes to purchase insurance for, the system of the present invention fills in the missing information based on information input to the system by the manufacturers.

As for the insurers, since an application for insurance can be received from the user through the system of the present invention, it is considered that a business effort can be reduced. Also, with the system of the present invention, information such as a term of usage that can be estimated from the purchased year and date and information about the guarantee by the manufacturer can be obtained. Therefore, the insurer can calculate an appropriate premium rate.

Other objects and further features of the present invention will be apparent from the following detailed description when read in conjunction with the accompanying drawings.

### BRIEF DESCRIPTION OF THE DRAWINGS

Fig. 1 is a schematic diagram showing a system configuration embodying the present invention.
Fig. 2 shows an example of a picture output by a reception program and displayed on a user terminal.
Fig. 3 shows an example of a picture output by a sign-up program and displayed on the user terminal.
Fig. 4 shows an example of a picture displayed on an insurer terminal and used when sending quote responses to the user.
Fig. 5 shows a table of an example of data stored in a personal possessions database.
Fig. 6 shows a table of an example of data stored in a user database.
Fig. 7 shows a table of an example of data stored in a product master database.
Fig. 8 shows a table of an example of data stored in an insurer master database.
Fig. 9 shows a table of an example of data stored in a history database.
Fig. 10 shows a table of an example of data stored in a maintenance master database.
Fig. 11 is a flowchart showing process steps for registering user information according to the system of the present invention.
Fig. 12 is a main flowchart of a method implemented by a system of the present invention.
Fig. 13 is a flowchart showing process steps implemented when an insurance contract is made.

### DETAILED DESCRIPTION OF THE PREFERRED EMBODIMENTS

In the following, principles and embodiments of the present invention will be described with reference to the accompanying drawings.

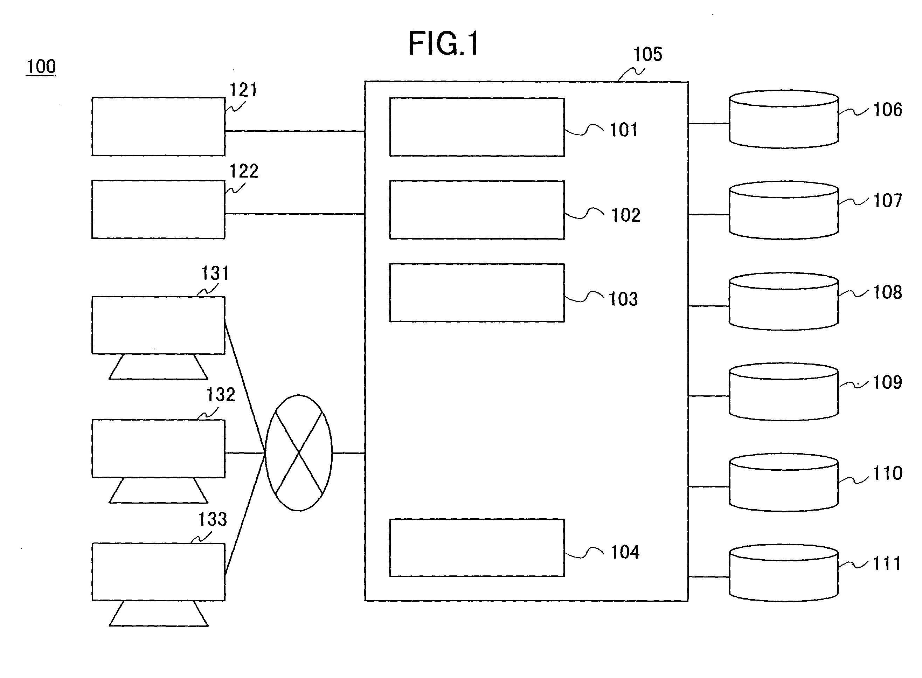

Fig. 1 is a schematic diagram showing a system configuration embodying the present invention. A system 100 of the present invention, which may be referred to as a product information system, comprises a data processing device 105 loaded with a reception program 101, a quote estimate program 102, a sign-up program 103 and a database (DB) update program 104.

The reception program 101 receives inputs such as product information and personal information inputted by the user. The quote estimate program 102 sends quote requests to the insurers and receives quote responses from the insurers. The sign-up program 103 implements necessary steps for signing up or applying for an insurance contract selected by the user. The DB update program 104 registers and updates data related to the system of the invention, which data may be personal information of the user, information of products possessed as personal possessions, information of the insurers, and information related to products available from the manufacturers.

The system 100 further comprises a personal possessions database 106, a user database 107, a product master database 108, an insurer master database 109, a history database 110 and a maintenance master database 111, all of which are connected to the data processing device 105. Hereinafter, the term "database" may be abbreviated as "DB" and the term "master database" may be simply referred to as a "master".

The personal possessions DB 106 stores product information for individual products possessed by the user. The user DB 107 stores personal information of the users. The product master 108 stores product information for individual product of each manufacturer. The insurer master 109 stores information such as addresses of the insurers and policies available from the insurers. The history DB 110 stores information related to transactions made between the user and each of the insurers. The maintenance master 111 stores maintenance information of the manufacturers.

The system 100 of the present invention further comprises an input part 121 for inputting data into the system and an output part 122 for outputting data from the system, both of which are connected to the data processing device 105. The data processing device 105 is connected to a network via a communication line so as to send/receive data to/from at least one user terminal 131, at least one insurer terminal 132 and at least one manufacturer terminal 133.

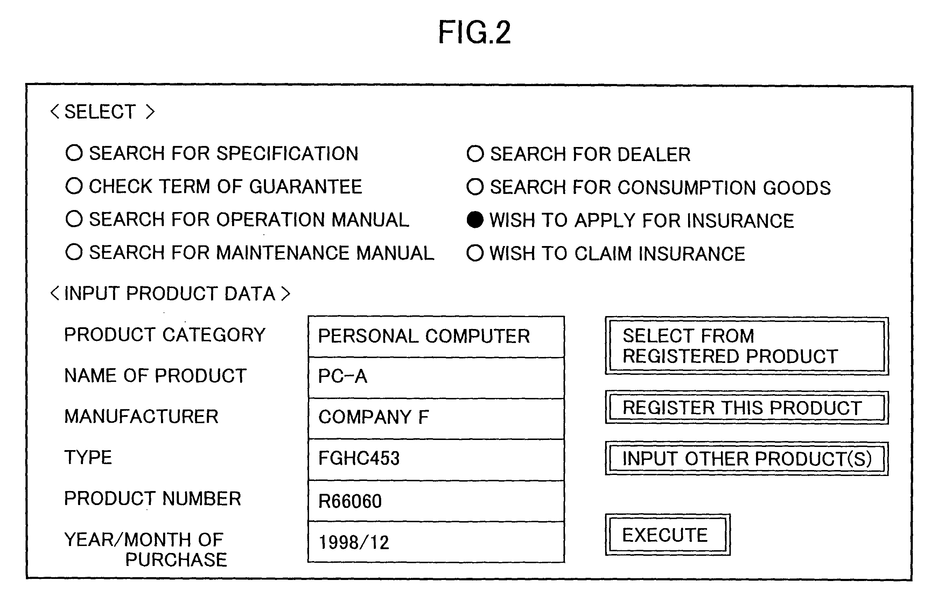

Fig. 2 shows an example of a picture output by the reception program 101 and displayed on the user terminal 131. With such a picture displayed on the user terminal 131, the reception program 101 receives instructions from the user regarding the type of service and the relevant product.

When the button labeled "execute" is clicked, the reception program 101 receives an instruction that the user requests a quote for insuring his/her product. In the example shown in the figure, the product to be insured is specified by product category "personal computer", name of product "PC-A", manufacturer "company F", type "FGHC453", production number "R66060", year and month of purchase "December 1998".

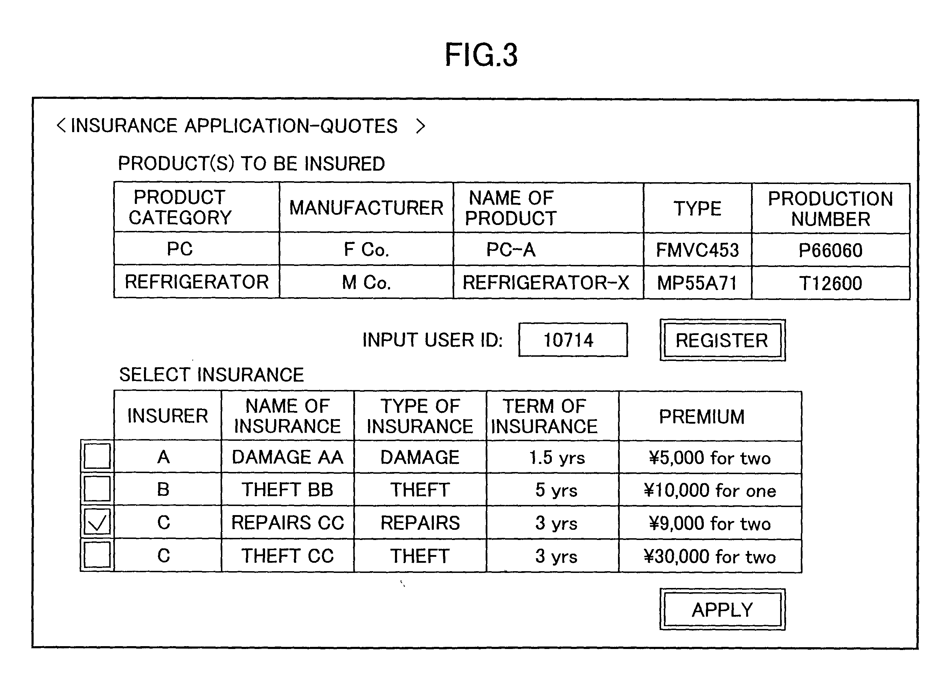

Fig. 3 shows an example of a picture output by the sign-up program 103 and displayed on the user terminal 131. The sign-up program 103 outputs such a picture according to responses obtained from the insurer. This screen shows the insurance policy which the user wishes to sign up (or apply for). This screen is also used for receiving instruction from the user and transmits sign-up information to the selected insurer.

In the example shown in Fig. 3, the user wishes to insure his personal computer "PC-A" and a refrigerator "refrigerator X" . The screen also shows quotes from various insurers. For example, insurer A offers insurance against damage, insurer B offers insurance against theft, and insurer C offers insurance including a guarantee for repairs and insurance against theft. The tick mark indicates that the user has chosen the insurance including the guarantee for repairs provided by the insurer C, and that the sign-up program 103 has accepted the user's application for the insurance.

With the example shown in Fig. 3, it is possible to newly register the user, in case the user is not yet registered. The user may proceed to the registering process by selecting the "REGISTER" button.

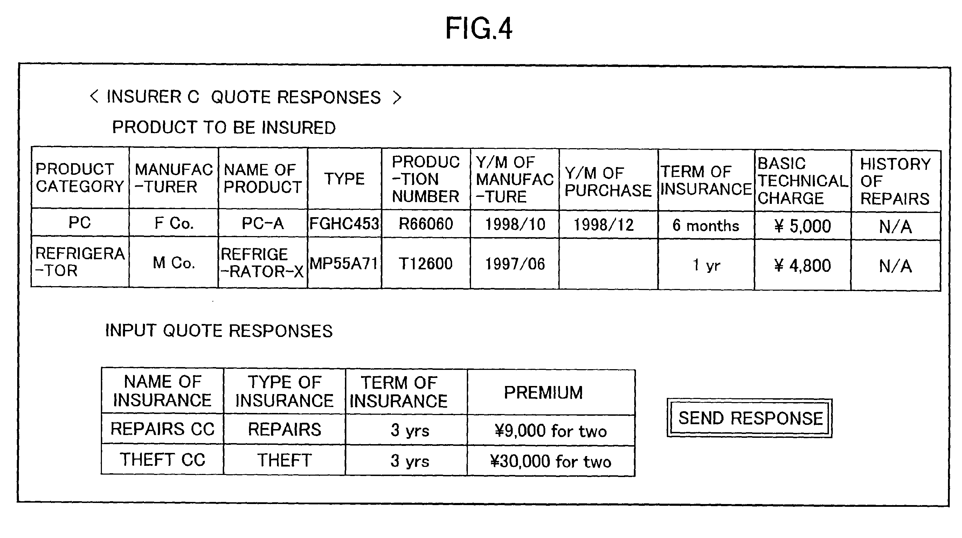

Fig. 4 shows an example of a screen displayed on the insurer terminal for sending quote responses to the user. Based on the information received from the user, such as the information shown in Fig. 2, the system 100 of the present invention outputs the picture as shown in Fig. 4 on the display of an insurer terminal 132. The insurer sends quote responses to the user from the insurer terminal 132.

The system 100 sends thus-obtained product information to the insurer with information related to the insurance of the product, information related to a basic technical charge, and information such as the history of repairs in the past attached thereto. The information related to the insurance of the product, such as year and month of manufacture and the term of guarantee, may be obtained by looking up the product master 108. The information related to the basic technical charge required for maintenance of the produce may be obtained by looking up the maintenance master 111. The information related to the history of repairs may be obtained by looking up the personal possessions DB 106.

The insurer refers to the information displayed on the screen and inputs information such the name, the type, the term and the premium of insurance that the insurer can offer to the user. The information is sent to the user as a quote response. If there is no information about the year and month of purchase, the information related to the year and month of manufacture can be used as substitute information. The premium can be calculated by the program using the information related to the year and month of purchase or the year and month of manufacture, or to the basic technical charge.

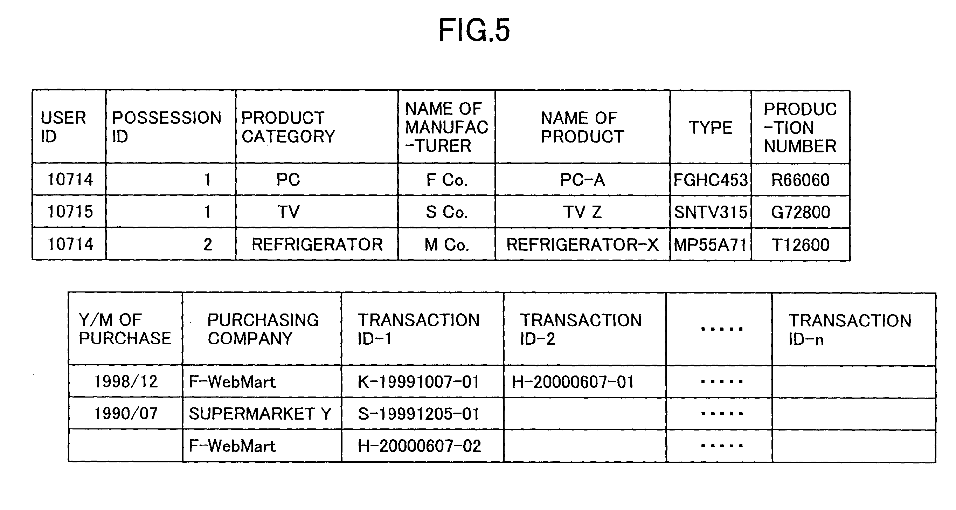

Fig. 5 shows a table of an example of data stored in a personal possessions database 106. The personal possessions DB 106 stores product information for each product possessed by the user. The personal possessions DB 106 stores data such as user ID for uniquely identifying the user, possession ID for individually identifying the product possessed by the user, product category, name of product, type of product, production number allocated by the manufacturer for uniquely identifying the product, year and month of purchase, name of purchasing company, and transaction IDs for uniquely identifying transactions of the product.

In the example shown in Fig. 5, the user having user ID "10714" possesses a personal computer PC-A having a possession ID "1" and a refrigerator "refrigerator X" having a possession ID "2". For the personal computer PC-A, it can be seen that the type is "FGHC453", the production number is "R66060", that it has been purchased on December 1998 from F-WebMart, and that two transactions have been made since there are two transaction IDs.

Fig. 5 also shows information similarly stored for the television Z possessed by a user whose user ID is "10715" and for the refrigerator X possessed by the user whose user ID is "10714".

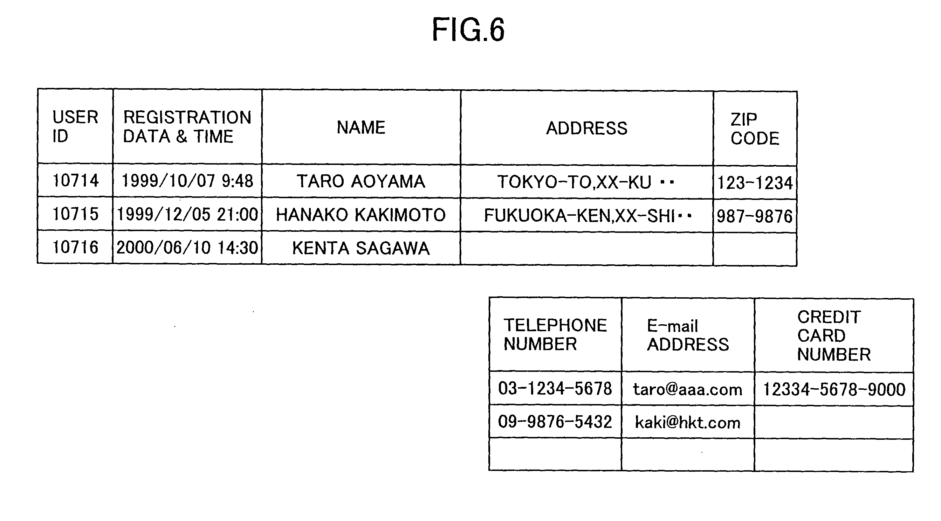

Fig. 6 shows a table of an example of data stored in a user database 107. The user DB 107 stores personal information of the users. The user DB 107 stores data such as user ID for uniquely identifying the user, date and time of user registration, name, address, zip code, telephone number, e-mail address, arid credit card number used for payment.

In the example shown in Fig. 6, the user TARO AOYAMA was registered on 7 October, 1999 as a user having user ID "10714" . It can be seen that his address is "TOKYO-TO, XX-KU", his zip code is "123-1234", his telephone number is "03-1234-5678", his e-mail address is "taro@aaa.com", and his credit card number is "1234-5678-9000". Fig. 6 also shows personal data similarly stored for user HANAKO KAKIMOTO with user ID "10715" and for user KENTA SAGAWA with user ID "10716".

It is not necessary for the user to register all the personal information as shown in the table of Fig.6. The user may choose to not input information such as his credit card number and address until there arises a need for payment for any service or delivery. The data stored in the personal possessions DB 106 shown in Fig. 5 and in the user DB 107 shown in Fig. 6 can be associated by linking the user ID.

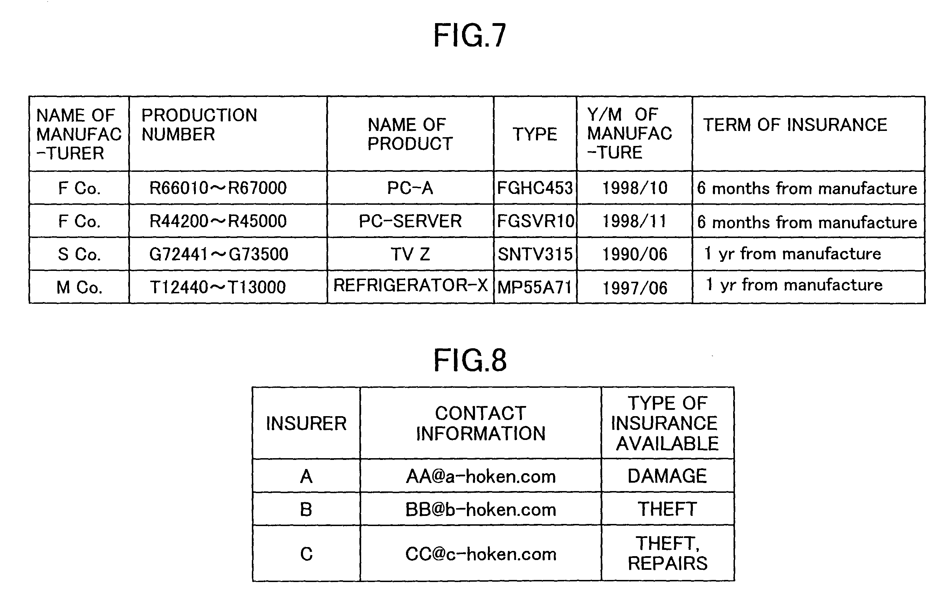

Fig. 7 shows a table of an example of data stored in a product master database 108. The product master 108 stores information related to individual products sold by each manufacturer. The product master 108 stores production number for uniquely identifying the product, name of product, type, year and month of manufacture, and term of insurance. The system 100 of the present invention cooperates with the manufacturer 133 so as to store information from the product master 108 in advance of the insurance application processes from the user.

It can be seen from the product master 108 that the product having production number "R66060" from manufacturer "company F" falls into a group of product numbers between "R66010" and "R67000". The product "R66060" is of product name "PC-A", type "FGHC453", year and month of manufacture "October 1998", and term of insurance "6 months from manufacture". Similarly, data related to "PC-SERVER" of "company F", "television Z" of "company S" and "refrigerator X" of "company M" are stored in the product DB 108.

The data stored in the personal possessions DB 106 shown in Fig. 5 and in the product DB 108 shown in Fig. 7 can be associated by linking the production number. Therefore, if the personal possessions DB 106 lacks any item related to the product information input by the user, the missing item can be filled using data retrieved from the product master 108.

Fig. 8 shows a table of an example of data stored in an insurer master database 109. The insurer master 109 stores information such as contact information and type of insurance available from the insurer. The insurer master 109 stores data such as the name of the insurer, the contact information used for requesting quotes or apply for insurance, and types of insurance available from the insurer. The system 100 of the present invention cooperates with the insurer 132 so as to store information in the insurer master 109 in advance of processing the insurance sign-up information from the user.

In the example shown in Fig. 8, an insurer A can be contacted through an e-mail address "AA@a-hoken.com". It is also shown in Fig. 8 that the insurer A offers damage insurance. Similar information is stored for insurers B and C. When the information received from the user is sent to the insurer, the quote estimate program 102 and the sign-up program 103 may refer to the insurance master to retrieve the destination of the information.

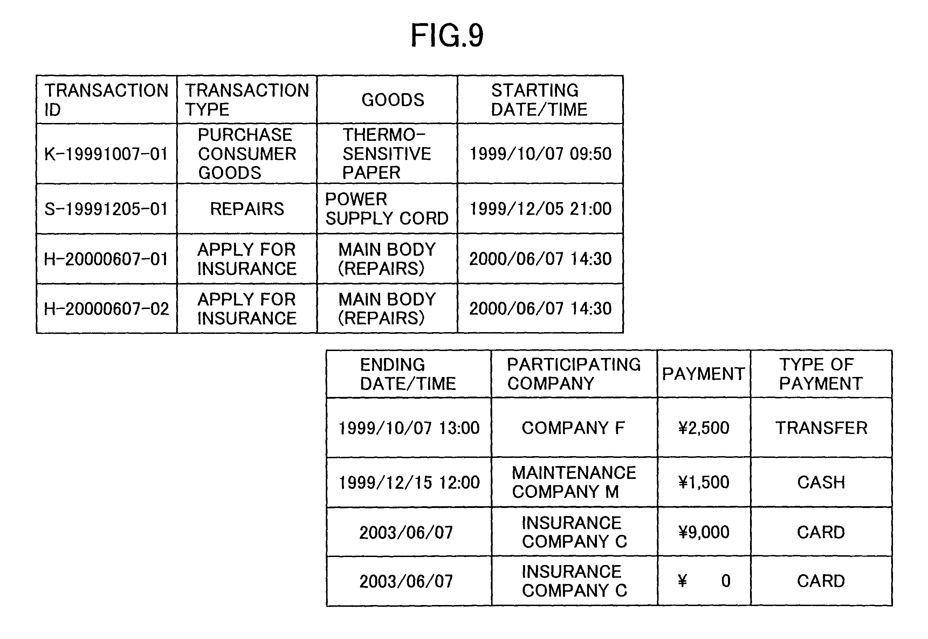

Fig. 9 shows a table of an example of data stored in a history database 110. The history DB 110 stores records of transactions made between the user and each participating company. The history DB 110 stores data such as transaction ID for uniquely identifying the transaction, the type of transaction, the goods under transaction, the starting date and ending date and time of the transaction, the name of the participating company, the amount of payment to be made by the transaction, and the type of payment.

In the example shown in Fig. 9, transaction ID "K-19991007-01" indicates a transaction where a thermo-sensitive paper which is consumption goods has been purchased from company F on October 7, 1999, at 2,500 yen and payment has been made by bank transfer. Similarly, information for other transactions are stored in the history DB 110. The data stored in the personal possessions DB 106 shown in Fig. 5 and in the history DB 110 shown in Fig. 9 can be associated by linking the transaction ID.

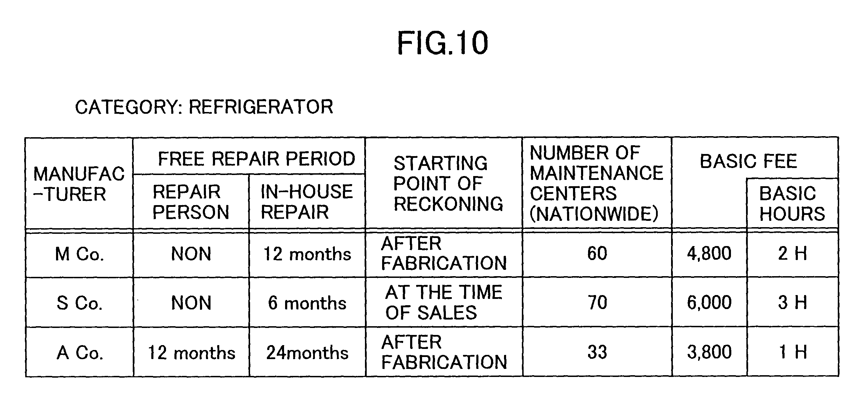

Fig. 10 shows a table of an example of data stored in a maintenance master database 111. The maintenance master 111 stores maintenance information for each product category provided by each manufacturer. For each manufacturer, the maintenance master 111 stores the name of manufacturer, period of free repair, starting point of reckoning, number of maintenance stations, basic fee for maintenance. The system 100 of the present invention cooperates with the manufacturer 133 so as to store information in the maintenance master 111 in advance of processing the insurance sign-up information from the user.

For example, by referring to the maintenance master 111 shown in Fig. 10, it can be seen that for production category "refrigerator" , company M does not send a repair service person, but instead guarantees in-house repairs within 12 months from the manufacturing date, and that there are 60 maintenance centers nationwide. Also, it can be seen that the basic fee required for maintenance is 4,800 yen for two hours of work. Similarly, the maintenance master 111 stores information for products offered by company S and company A.

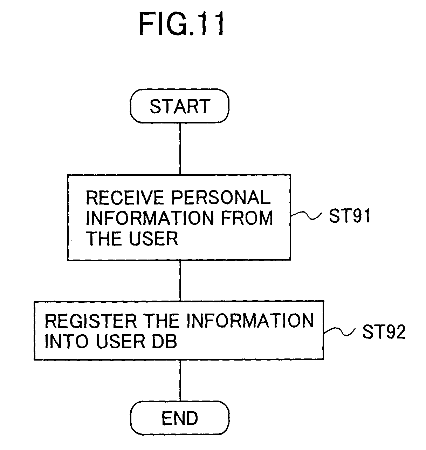

The data stored in the personal possessions DB 106 shown in Fig. 5 and in the maintenance master 111 shown in Fig. 10 can be associated by linking the category of product. Therefore, when outputting quote responses on the screen of the insurer terminal, as shown in Fig. 4, the maintenance information of the manufacturer for insured product can be added to the quote response by looking up the maintenance master 111 for item(s) related to the product inputted by the user. Referring now to Fig. 11, an example of an operation of the present invention will be described. Fig. 11 shows a flowchart illustrating process steps implemented by the system 100 of the present invention for registering personal information of the user. The system 100 of the present invention encourages registration of information of the user when personal information is required. For example, personal information is required when applying for insurance. It is to be noted that encouragement of the user to input information may be carried out prior to the time at which information input becomes necessary. For example, the information input by the user upon request of the quotes for the insurance may be registered as personal possessions information, and at the same time, the user may be encouraged to input his personal information.

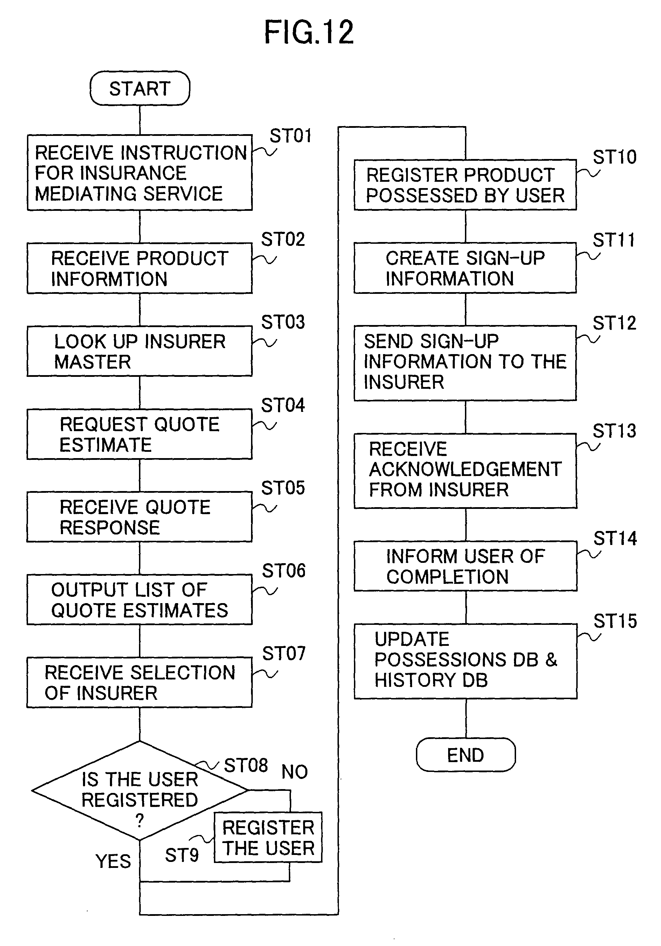

At step ST91, the system 100 of the present invention receives personal information from the user. At step ST92, the system 100 of the present invention registers the received personal information into the user DB 107 via the DB update program 104. When it is a new registration, a new user ID is obtained and registered in the user ID column. Then, the user is informed of the user ID. Fig. 12 is a main flowchart of a method implemented by a system 100 of the present invention. At steps ST01 and ST02, the reception program 101 receives the product information and an instruction "wishing to apply for insurance" from the user through the screen shown in Fig. 2. Then, the reception program 101 temporarily stores the received data.

Reception of the data is not restricted to one product information at a time. As shown in Fig. 2, there is an instruction "input information of other product". Alternatively, other product information can be received by successively displaying an input screen for other products. Further, it is possible to provide an instruction "select from registered product." In such a case, the user is encouraged to input the user ID, so that by referring to the registered personal possessions DB 106, the product to be processed can be selected from the plurality of registered personal possessions.

At step ST03, the quote estimate program 102 looks up the insurer master 109 so as to refer to the information related to the contact information of the insurers. At step ST04, the quote estimate program 102 sends, to the contact address for the insurer, a request for a quote estimate. The quote estimate request is the information that has been temporarily stored at step ST02 by the reception program 101.

It is noted that the production master 108 and the maintenance master 111 can be linked by the production number and the type of production. Therefore, when sending the quote estimate request, the information such as the manufacturing date and guarantee data obtained from those master databases can be added to the information input by the user.

At step ST05, the quote estimate program 102 receives quote responses from the insurers in accordance with the request from the system 100 of the present invention. At step ST06, the quote response information received at step ST05 is combined with the information temporarily stored by the reception program 101. Then, the combined data is output in a form as shown in Fig. 3.

At step ST07, the sign-up program 103 receives the data of the insurer selected by the user. For example, in Fig. 3, the sign-up program 103 is instructed by the user of user ID "10714" to apply for insurance of repairs CC offered by the insurer C.

At step ST08, according to the sign-up information from the user, the sign-up program 103 determines whether this user has already been registered in the user DB 107. In the example shown in Fig. 3, since the user ID has been inputted by the user, it is determine that his user has already been registered in the user DB 107, and the process proceeds to step ST10. If the user ID is not inputted and a new registration is instructed, the process proceeds to user registration process step ST09.

The user registration process of step ST09 is implemented according to the flowchart show in Fig. 11. The reception program 101 receives the information input by the user. The information includes data such as items in the user DB 107, which may be name, address, e-mail address, and credit card number. The user ID is newly obtained for this user. Then, using the DB update program 104, the received information and the newly obtained user ID are registered in the user DB 107. The newly obtained user ID is informed to the user.

At step ST10, the reception program 101 receives the product possessed by the user and, via the DB update program 104, registers the data of the product in the personal possessions DB 106. In this case, since the information already received and temporarily stored by the reception program 101 can be used, it is only necessary to receive information related to the remaining items in the personal possessions DB 106 such as the name of purchaser. Then, the possessions ID is newly obtained. The received information and the newly obtained possessions ID are registered in the personal possessions DB 106 by the DB update program 104. In case where the user ID is newly obtained in step ST09, the newly obtained user ID is stored in the user ID column. In a case where the user ID is directly received from the user, the received user ID is stored in the user ID column, in the case of new registration at step ST09. The user DB 107 and the personal possessions DB 106 are linked by the user ID.

After registering the information, the process proceeds to step ST11. At step ST11, the sign-up program 103 looks up the user DB 107 and the personal possessions DB 106 so as to extract information required for signing up for insurance from personal information of the user and information of the product to be insured. Thus, sign-up information is created. At step ST12, the sign-up information is sent to the selected insurer.

In the example shown in Fig. 3, the sign-up program 103 looks up the user DB 107 and obtains data related to the user having user ID "10714". The sign-up program 103 also looks up the personal possessions DB 106 and obtains product information related to the personal computer PC-A and to the refrigerator X which have been temporarily stored by the reception program 101. Then, the sign-up program 103 sends sign-up information to the contact address "CC@c-hoken.com" of the insurer C selected by the user.

At step ST13, the sign-up program 103 receives acknowledgement from the insurer that the sign-up information has been received. Then, at step ST14, information is sent to the user indicating that the sign-up procedure for insurance has been completed.

At step ST15, in order to record the transaction for signing up for insurance, the DB update program 104 newly obtains a transaction ID and registers this transaction ID in the personal possessions DB 106 and in the history DB 110. The system informs the insurer of the newly obtained transaction ID.

For example, in the transaction of the present embodiment, the user with user ID "10714" has insured his personal computer PC-A and the refrigerator X with an insurance offered by insurer C, which provides repairs by sending a repair service person. Then, new transaction IDs "H-20000607-01" and "H-20000607-02" are obtained and registered in the relevant column of the personal possessions DB 106. Further, information related to the transaction corresponding to thus-registered transactions ID is registered in the history DB 110.

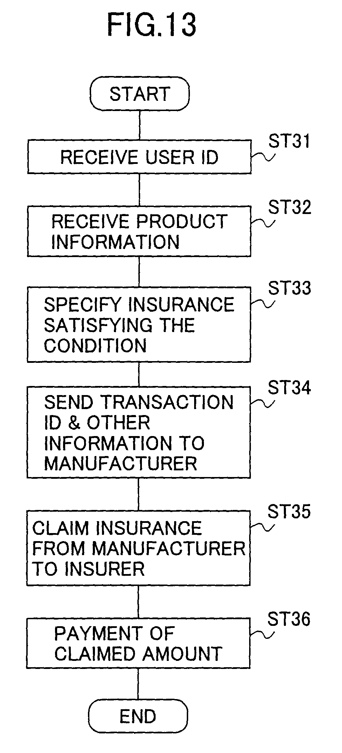

Fig. 13 is a flowchart showing process steps implemented when an insurance contract is made. The reception program 101 accepts an instruction "wishing to claim insurance" and an input of the user ID at step ST31. Then, at step ST32, the reception program 101 accepts the input of product information. The user ID may be used as a key for searching the personal possessions DB 106, so as to display a list of products possessed by the relevant user and let the user choose the product/products to be insured.

At ST33, using the information received by the reception program 101 at steps ST31 and ST32, the sign-up program 103 searches the personal possessions DB 106 for the transaction ID associated with the information related to the manufacturer and to the relevant product. Further, using the transaction ID, the sign-up program 103 searches the history DB 110 so as to specify the relevant insurance and the insurer.

Then, at step ST34, the sign-up program 103 sends the transaction ID for the insurer to specify the insurance, user information, product information, and information related to the insurer to the manufacturer specified at step ST33. The manufacturer offers the service according to the information sent at step ST34. Then, at step ST35, the manufacturer sends information for claiming payment along with the transaction ID.

At step ST36, the insurer that has received the claim of payment from the manufacturer specifies the insurance according to the transaction ID. Then, the insurer proceeds to the procedure for paying the claimed amount of money.

The production information system of the present invention enables various operations. Such operations may be sending quote requests for a plurality of insurers in a facilitated manner using various product information specified by the user, applying for insurance offered by an appropriate insurer and letting the user claim payment for insurance applied for in the past.

It is to be noted that the production information system of the present information is not limited to the structure of the embodiments described above. The system of the present invention may be linked to manufacturers of the products, so that the product master 108 may be provided at each manufacturer.

Further, the present invention is not limited to these embodiments, but variations and modifications may be made without departing from the scope of the present invention.

The present application is based on Japanese priority application No. 2000-219708 filed on July 19, 2000, the entire contents of which are hereby incorporated by reference.

## Claims

1. A system (100) for mediating between at least one user and at least one manufacturer via a network, said system (100) **characterized by** comprising:
a storage part (106,107,108,109,110,111) in which purchase information related to products possessed by said at least one user is stored; and
an insurance request part (105) capable of requesting insurance on said products according to said purchase in formation stored in said storage part (106,107,108,109,110,111).

2. The system (100) as claimed in claim 1,
**characterized in that** said insurance request part (105) sends information including at least a number of years used, year and month of purchase and maintenance of the product.

3. The system (100) as claimed in claim 1,
**characterized in that** said insurance request part (105) sends information for collectively insuring a plurality of products possessed by the user with a single insurance contract.

4. The system (100) as claimed in claim 1,
**characterized in that** said insurance request part (105) further comprises:
a quote estimate part (102) requesting a quote estimate from a plurality of insurers; and
a sign-up part (103) sending a sign-up instruction to the insurer selected by the user to make a contract for insurance.

5. A system (100) for mediating between at least one user and at least one manufacturer via a network, said system (100) **characterized by** comprising:
a first storage part in which purchase information related to products possessed by said at least one user is stored;
a second storage part in which at least an identifier of a product and guarantee information related to said product are stored for each product available from said at least one manufacturer; and
an insurance request part (105) which requests insurance on said products according to said purchase information stored in said storage part.

6. The system (100) as claimed in claim 5,
**characterized in that** said insurance request part (105) sends information including at least a number of years used, year and month of purchase and maintenance of the product.

7. The system (100) as claimed in claim 5,
**characterized in that** said insurance request part (105) sends information for collectively insuring a plurality of products possessed by the user with a single insurance contract.

8. The system (100) as claimed in claim 5,
**characterized in that** said insurance request part (105) further comprises:
a quote estimate part (102) requesting a quote estimate from a plurality of insurers; and
a sign-up part (103) sending a sign-up instruction to the insurer selected by the user to make a contract for insurance.

9. A system (100) for managing information transfer over a network between at least one user, at least one manufacturer and at least one insurer, said system (100) **characterized by** comprising:
a storage part (106,107,108,109,110,111) in which purchase information related to products possessed by said at least one user is stored; and
an insurance request part (105) capable of sending requests to said at least one insurer for making an insurance contract on said products according to said purchase information stored in said storage part (106,107,108,109,110,111).

10. A method of mediating between at least one user and at least one manufacturer over a network, said method **characterized by** comprising the steps of:
a) receiving purchase information related to products possessed by said at least one user;
b) storing said purchase information in a storage part (106,107,108,109,110,111); and
c) requesting insurance on said products according to said purchase information stored in said storage part (106,107,108,109,110,111).

11. A method of managing information transfer over a network between at least one user, at least one manufacturer and at least one insurer, said method **characterized by** comprising the steps of:
a) receiving purchase information related to products possessed by said at least one user;
b) storing said purchase information in a storage part (106,107,108,109,110,111); and
c) sending requests to said at least one insurer for making an insurance contract on said products according to said purchase information stored in said storage part (106,107,108,109,110,111).

12. A computer readable medium storing a program for executing a method of operating a product information system (100) mediating between at least one user and at least one manufacturer over a network, said method **characterized by** comprising the steps of:
a) receiving purchase information related to products possessed by said at least one user;
b) storing said purchase information in a storage part (106,107,108,109,110,111); and
c) requesting insurance on said products according to said purchase information stored in said storage part (106,107,108,109,110,111).

13. A data processing device (105) connected to a network and to a plurality of databases (106,107,108,109,110,111), said network being connected to at least one user terminal (131), at least one manufacturer terminal (132) and at least one insurer terminal (133), said data processing device (105) **characterized by** comprising:
a reception program (101) receiving product information and user information;
a quote estimate program (102) sending a quote request to said at least one insurer and receiving a quote response from said at least one insurer;
a sign-up program (103) implementing sign-up procedures to make an insurance contract selected by the user; and
a database update program (104)registering and updating information in said plurality of databases (106,107,108,109,110,111).

14. The data processing device (105) as claimed in claim 13,
**characterized in that** said plurality of databases (106,107,108,109,110,111) includes:
a personal possessions database (106) capable of storing product information for individual products possessed by the user;
a user database (107) capable of storing personal information of the user;
a product master database (108) capable of storing product information for individual products of each manufacturer;
an insurer master database (109) capable of storing information such as addresses of the insurers and policies available from the insurers;
a history database (110) capable of storing information related to transactions made between the user and each of the insurers; and
a maintenance master database (111) capable of storing maintenance information of the manufacturers.

15. The data processing device (105) as claimed in claim 13,
**characterized in that** said sign-up program (103) looks up said user database (107) and said personal possessions database (106) so as to extract information required for signing up for insurance.
